# EUROPEAN PATENT APPLICATION

(11) **EP 4 725 728 A1**
(43) Date of publication of application: **15.04.2026**
(21) Application number: 25205914.2
(22) Date of filing: 30.09.2025
(51) Int. Cl.: B60H 1/32, B60H 1/00

(54) **IN-VEHICLE AIR CONDITIONER AND REFRIGERANT MODULE**

(30) Priority: 11.10.2024 JP 2024178604
(71) Applicant: TOYOTA JIDOSHA KABUSHIKI KAISHA, Toyota-shi, Aichi-ken 471-8571 (JP)
(72) Inventor: TSUCHIYA, Akira, TOYOTA-SHI, AICHI-KEN, 471-8571 (JP); OIDE, Hiroyasu, KARIYA-CITY, AICHI-PREF, 448-8661 (JP)
(74) Representative: Cabinet Beau de Loménie

(57) **Abstract**

An in-vehicle air conditioner (12, 12a) includes a refrigerant circuit (R, Ra) for circulating a refrigerant, the refrigerant circuit (R, Ra) having a compressor (20), a condenser (22), an expansion valve (24a), and an evaporator (26a). The in-vehicle air conditioner (12, 12a) includes a first heat exchanger (30) which is integrally formed with the condenser (22) of the refrigerant circuit (R, Ra) to transfer heat from the refrigerant contained in the condenser (22) to a first cooling liquid, a first cooling liquid circuit (C1) for circulating the first cooling liquid, a second heat exchanger (40) which is integrally formed with the evaporator (26a) of the refrigerant circuit (R, Ra) to cool a second cooling liquid with the refrigerant contained in the evaporator (26a), and a second cooling liquid circuit (C2) for circulating the second cooling liquid. The compressor (20), the first heat exchanger (30), the expansion valve (24a), and the second heat exchanger (40) are fixed to a common fixation member (100, 100a, 100b, 100c, 100d), to thereby form a refrigerant module (RM, RMa, RMb) in which the refrigerant circuit (R, Ra) is integrated into one unit.

## Description

### TECHNICAL FIELD

This specification discloses an in-vehicle air conditioner and a refrigerant module.

### BACKGROUND

Vehicles are equipped with air conditioners. Individual components that make up the refrigerant circuit of the air conditioner are assembled into the vehicle at the vehicle factory. Patent Literature 1 (JP 2020-131937 A) discloses a refrigerant circuit device in which a refrigerant circulates in a vehicle air conditioner.

### SUMMARY

Vehicle air conditioners differ in terms of the type of refrigerant required and cooling and heating performance depending on, for example, the vehicle model or the region where the vehicle is used. Therefore, it is necessary to change the refrigerant injected into the refrigerant circuit or the devices constituting the refrigerant circuit according to the vehicle model or the region where the vehicle is used. This makes the assembly of refrigerant circuits for vehicles complicated and requires a large work space. Therefore, a configuration that simplifies the installation of refrigerant circuits in vehicles is desired.

This specification discloses an in-vehicle air conditioner and a refrigerant module that facilitate the assembly of a refrigerant circuit for an air conditioner in a vehicle.

An in-vehicle air conditioner disclosed in this specification includes a refrigerant circuit for circulating a refrigerant, the refrigerant circuit includes a compressor, a condenser for heat dissipation, an expansion valve, and an evaporator for heat absorption. The in-vehicle air conditioner includes a first heat exchanger which is integrally formed with the condenser of the refrigerant circuit to transfer heat from the refrigerant contained in the condenser to a first cooling liquid; a first cooling liquid circuit for circulating the first cooling liquid, the first cooling liquid circuit having a radiator; a second heat exchanger which is integrally formed with the evaporator of the refrigerant circuit to cool a second cooling liquid with the refrigerant contained in the evaporator; a second cooling liquid circuit for circulating the second cooling liquid, the second cooling liquid circuit having a cooler core; and an air conditioning unit which includes an air passage in which the cooler core is disposed, the air conditioning unit configured to cool air passing through the air passage and send the cooled air to a vehicle compartment. The compressor, the first heat exchanger, the expansion valve, and the second heat exchanger are fixed to a common fixation member, to thereby form a refrigerant module in which the refrigerant circuit is integrated into one unit.

According to this configuration, the refrigerant circuit dissipates heat to the first cooling liquid of the first cooling liquid circuit and absorbs heat from the second cooling liquid of the second cooling liquid circuit, thereby enabling the refrigerant circuit to be concentrated in a relatively narrow area within the vehicle and modularized. By installing the refrigerant module in the vehicle, a refrigerant circuit can be installed in the vehicle. Since there is no need to individually install the components (parts) that make up the refrigerant circuit into the vehicle, the installation of the refrigerant circuit into the vehicle can be made easier. For example, multiple types of refrigerant modules can be prepared in advance, and at the vehicle manufacturing plant, the desired refrigerant module can be selected from among the multiple types of refrigerant modules based on the vehicle model or the region where the vehicle will be used, and then installed into the vehicle.

In the in-vehicle air conditioner according to the present disclosure, the common fixation member may include a plate; and the compressor, the first heat exchanger, the expansion valve, and the second heat exchanger may be fixed to an upper surface and/or a lower surface of the plate.

This configuration allows for a simplified refrigerant module.

In the in-vehicle air conditioner according to the present disclosure, the plate may include in an inside thereof a flow channel through which the refrigerant flows; and the flow channel in the plate may serve as a refrigerant channel connecting at least two of the compressor, the first heat exchanger, the expansion valve, and the second heat exchanger.

According to this configuration, the refrigerant channel is shortened, enabling space savings in the refrigerant module. In addition, the number of pipes for the refrigerant circuit can be reduced or eliminated.

**In** the in-vehicle air conditioner according to the present disclosure, the evaporator and the second heat exchanger may be an air conditioner evaporator and an air conditioner heat exchanger, respectively. The refrigerant circuit further may include a battery evaporator. The in-vehicle air conditioner further may include a battery heat exchanger which is integrally formed with the battery evaporator in the refrigerant circuit to cool a battery cooling liquid with the refrigerant contained in the battery evaporator, and a battery cooling liquid circuit configured to circulate the battery cooling liquid for cooling a battery installed in a vehicle. The battery heat exchanger may be fixed to the common fixation member.

According to this configuration, the in-vehicle battery can be cooled using the refrigerant module.

In the in-vehicle air conditioner according to the present disclosure, the refrigerant may be a hydrocarbon refrigerant. The hydrocarbon refrigerant may be propane or a refrigerant mainly composed of propane.

A vehicle disclosed in this specification includes the above-mentioned in-vehicle air conditioner.

A refrigerant module for an in-vehicle air conditioner is disclosed in this specification. The in-vehicle air conditioner includes a refrigerant circuit for circulating a refrigerant, the refrigerant circuit includes a compressor, a condenser for heat dissipation, an expansion valve, and an evaporator for heat absorption. The in-vehicle air conditioner includes a first heat exchanger which is integrally formed with the condenser of the refrigerant circuit to transfer heat from the refrigerant contained in the condenser to a first cooling liquid; a first cooling liquid circuit for circulating the first cooling liquid, the first cooling liquid circuit having a radiator; a second heat exchanger which is integrally formed with the evaporator of the refrigerant circuit to cool a second cooling liquid with the refrigerant contained in the evaporator; a second cooling liquid circuit for circulating the second cooling liquid, the second cooling liquid circuit having a cooler core; and an air conditioning unit which includes an air passage in which the cooler core is disposed, the air conditioning unit configured to cool air passing through the air passage and supply the cooled air to a vehicle compartment. The refrigerant module includes the refrigerant circuit, the first heat exchanger, the second heat exchanger, and a fixation member to which the compressor, the first heat exchanger, the expansion valve, and the second heat exchanger are fixed so as to integrate the refrigerant circuit into one unit.

According to the technology disclosed in this specification, it is possible to facilitate the assembly of refrigerant circuits for vehicles.

### BRIEF DESCRIPTION OF DRAWINGS

Embodiments of the present disclosure will be described based on the following figures, wherein:
FIG. 1 is a schematic diagram showing the configuration of an air conditioner;
FIG. 2 is a schematic diagram showing the layout of air conditioner in a vehicle;
FIG. 3 is a perspective view showing the refrigerant module;
FIG. 4 is a cross-sectional view showing a cross section of plate 100 of FIG. 3;
FIG. 5 is a diagram illustrating the assembly work of the refrigerant modules in a vehicle factory;
FIG. 6 is a schematic diagram showing the configuration of another air conditioner;
FIG. 7 is a perspective view showing another refrigerant module;
FIG. 8A is a perspective view showing a further refrigerant module;
FIG. 8B is a perspective view showing an example of a fixation member;
FIG. 8C is a perspective view showing another example of a fixation member.

### DESCRIPTION OF EMBODIMENTS

### <Preface>

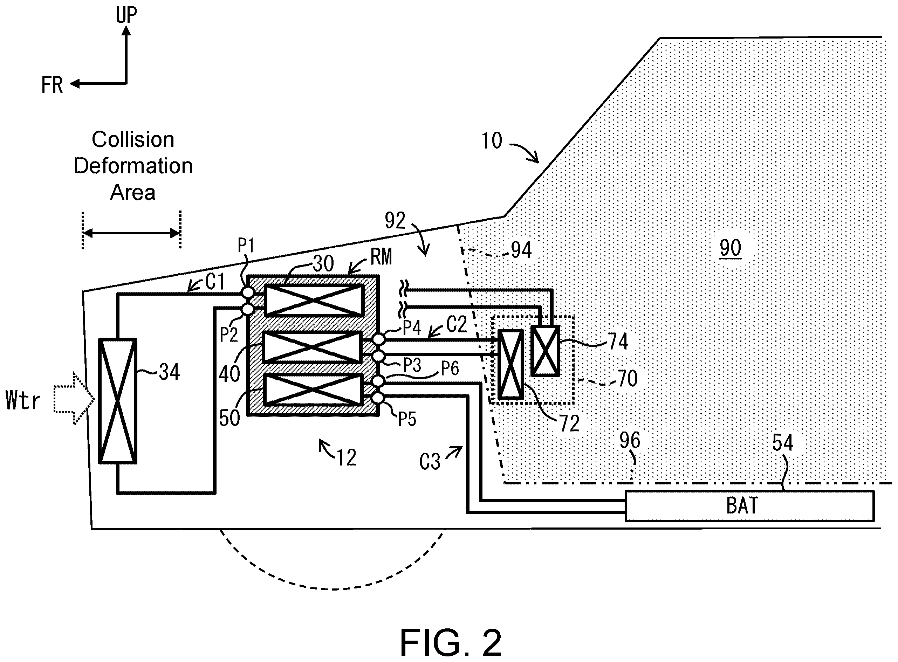

The embodiments will be described below with reference to the drawings. In all drawings, the same reference numerals indicate the same elements, and duplicate descriptions are omitted. In the following description, unless otherwise specified, terms indicating directions and orientations such as front, rear, left, right, up, and down refer to directions and orientations relative to the vehicle. **In** FIG. 2 described below, the direction of the arrow FR indicates forward, and the direction of the arrow UP indicates upward.

The air conditioner is installed in a vehicle such as an automobile. In the embodiments described below, the type of vehicle in which the air conditioner is installed is not limited. For example, the vehicle may be an engine vehicle powered by an engine or an electric vehicle powered by a motor. The vehicle may also be a Hybrid Electric Vehicle (HEV) or Plug-in Hybrid Electric Vehicle (PHEV) equipped with both an engine and a motor. The vehicle may also be a Fuel Cell Electric Vehicle (FCEV) equipped with a fuel cell, or a Battery Electric Vehicle (BEV) that travels on electric power stored in a battery.

In addition, in each embodiment described below, the type of refrigerant used in the refrigerant circuit of the air conditioner is not limited. The refrigerant may be, for example, R134a, R1234yf, natural refrigerants, etc. Natural refrigerants include carbon dioxide refrigerants, ammonia refrigerants, hydrocarbon refrigerants, etc.

Hydrocarbon refrigerants (also known as HC refrigerants) are flammable. Examples of HC refrigerants include propane, butane, isobutane, ethane, ethylene, and propylene. In the refrigerant circuit described below, one type of HC refrigerant or a mixture of two or more types of HC refrigerants may be used. In addition, a mixed refrigerant containing a refrigerant other than an HC refrigerant and various additives, etc., with one or more HC refrigerants as the main component, may be used in the refrigerant circuit. For example, a refrigerant containing propane or propane as the main component and at least one of other refrigerants and additives (a refrigerant with propane as the main component) may be used in the refrigerant circuit. In this specification, hydrocarbon refrigerants refer to pure hydrocarbon refrigerants or refrigerants containing hydrocarbon refrigerants as the main component.

The refrigerant circuit is the heat source for the air conditioner. The refrigerant circuit includes, in order along the direction of refrigerant flow, a compressor, a condenser for heat dissipation, an expansion valve, and an evaporator for heat absorption. A receiver may be provided between the condenser and the expansion valve. An accumulator may also be provided between the evaporator and the compressor.

The air conditioner may include a high-temperature cooling liquid circuit in which cooling liquid heated by a condenser of a refrigerant circuit circulates, and a low-temperature cooling liquid circuit in which cooling liquid cooled by an evaporator of the refrigerant circuit circulates. The cooling liquid is a heat transfer medium, and the high-temperature cooling liquid circuit and the low-temperature cooling liquid circuit are each a heat transfer medium circuit.

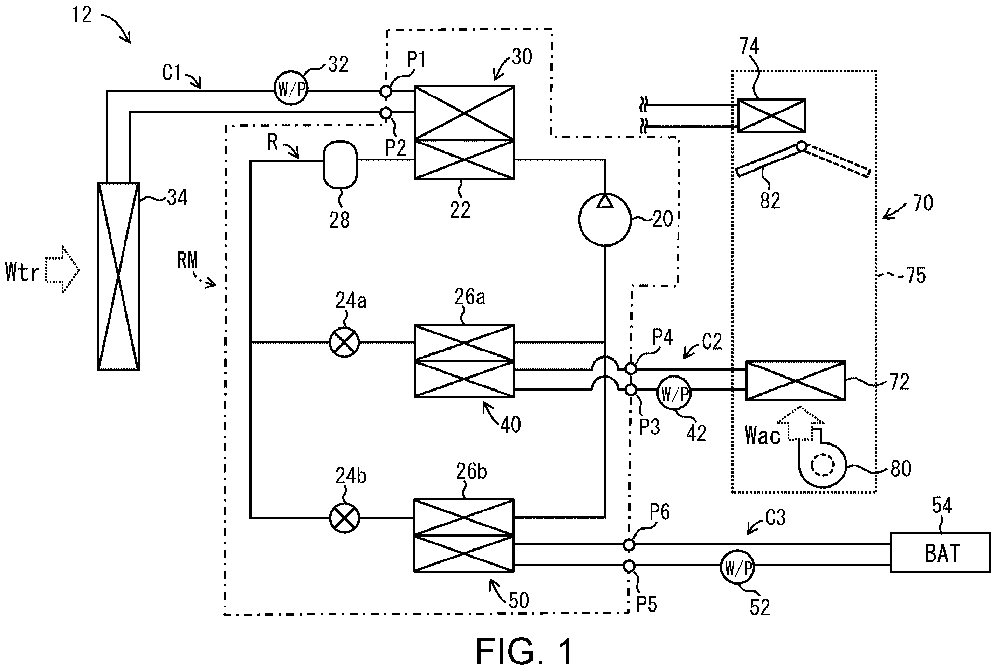

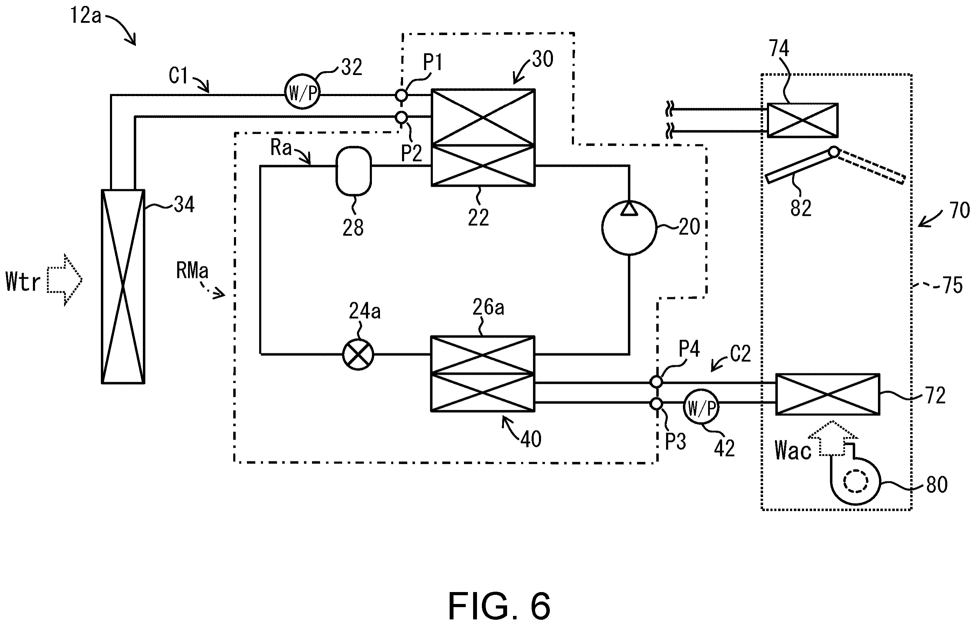

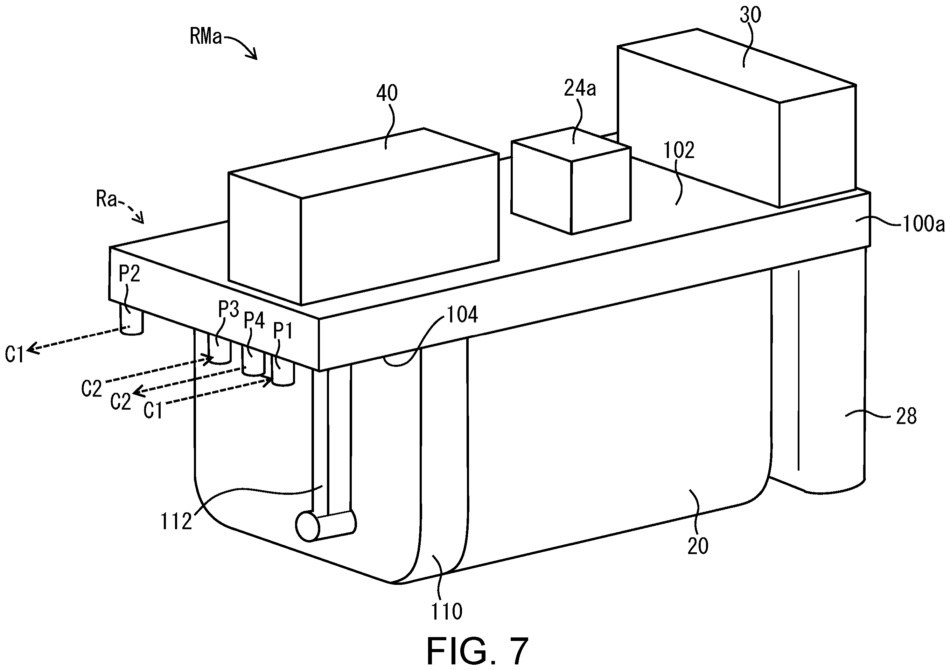

In the embodiment described below, as shown in FIG. 1, the air conditioner 12 includes the first cooling liquid circuit C1 as a high-temperature cooling liquid circuit and second and third cooling liquid circuits C2 and C3 as low-temperature cooling liquid circuits. The air conditioner 12 may be configured without the third cooling liquid circuit C3, which is described with reference to FIGs. 6 and 7.

The cooling liquids of the first to third cooling liquid circuits C1, C2, and C3 may be cooling water. That is, the cooling liquids may be water without additives, water mixed with additives such as antifreeze agents or corrosion inhibitors, or coolant fluid. Furthermore, the cooling liquids may be a liquid heat transfer medium such as oil, and are not limited to the above.

In the embodiment described below, the refrigerant circuit is integrated to form a refrigerant module. The refrigerant module is, for example, located under the front hood of a vehicle. Hereinafter, regardless of the presence or absence of a power source (engine, motor, etc.) under the front hood and the type of power source, the area under the front hood is referred to as the "engine room."

### <Embodiment>

FIG. 1 is a schematic diagram showing the configuration of the air conditioner 12 according to an embodiment. FIG. 2 is a schematic diagram showing the arrangement of the air conditioner 12 in a vehicle. The vehicle 10 includes the battery 54 that supplies power to a motor as a power source. The vehicle 10 may be, for example, a Battery Electric Vehicle (BEV), a Hybrid Electric Vehicle (HEV), or a Plug-in Hybrid Electric Vehicle (PHEV).

The air conditioner 12 air-conditions the vehicle compartment 90 and cools the battery 54. The air conditioner 12 may be configured to cool in-vehicle device such as a power control unit (PCU) together with the battery 54 or in place of the battery 54.

As shown in FIG. 1, the air conditioner 12 includes the refrigerant circuit R that serves as a heat source, the first to third cooling liquid circuits C1, C2, and C3, and the air conditioning unit 70. The first cooling liquid circuit C1 circulates a first cooling liquid heated by the refrigerant in the refrigerant circuit R. The second cooling liquid circuit C2 circulates a second cooling liquid cooled by the refrigerant in the refrigerant circuit R. Similarly, the third cooling liquid circuit C3 circulates a third cooling liquid cooled by the refrigerant in the refrigerant circuit R. The air conditioning unit 70 supplies air cooled by the second cooling liquid circulating in the second cooling liquid circuit C2 to the vehicle compartment.

The refrigerant circuit R is a closed circuit for circulating refrigerant, which is configured by the compressor 20, the condenser 22, the receiver 28, the expansion valves 24a and 24b, and the evaporators 26a and 26b connected in series by refrigerant pipes. The expansion valve 24a and the evaporator 26a are connected in series, and similarly, the expansion valve 24b and the evaporator 26b are connected in series. The refrigerant channel of the expansion valve 24a and the evaporator 26a and the refrigerant channel of the expansion valve 24b and the evaporator 26b are connected in parallel.

The air conditioner 12 includes the heat exchanger 30. The heat exchanger 30 is integrally formed with the condenser 22 of the refrigerant circuit R and causes heat exchange between the refrigerant of the refrigerant circuit R and the first cooling liquid of the first cooling liquid circuit C1. The heat exchanger 30 is a water-cooled condenser and may be, for example, a plate-type heat exchanger. The heat exchanger 30 is a first heat exchanger.

The first cooling liquid circuit C1 is a closed circuit for circulating the first cooling liquid, which is configured by connecting the water pump 32, the heat exchanger 30, and the radiator 34 in series with cooling liquid pipes. The radiator 34 is a heat exchanger for heat exchange between the first cooling liquid and the vehicle traveling wind Wtr. **In** the first cooling liquid circuit C1, the first cooling liquid pumped by the water pump 32 becomes hot due to the heat dissipated by the refrigerant in the condenser 22 in the refrigerant circuit R as it passes through the heat exchanger 30. The hot first cooling liquid is sent to the radiator 34, where it is cooled by the vehicle traveling wind Wtr.

The air conditioner 12 also includes the heat exchanger 40. The heat exchanger 40 is integrally formed with the evaporator 26a of the refrigerant circuit R and causes heat exchange between the refrigerant of the refrigerant circuit R and the second cooling liquid of the second cooling liquid circuit C2. The heat exchanger 40 may be, for example, a plate-type heat exchanger. The heat exchanger 40 is a second heat exchanger.

The second cooling liquid circuit C2 is a closed circuit for circulating the second cooling liquid, which is configured by connecting the water pump 42, the heat exchanger 40, and the cooler core 72 in series with cooling liquid pipes. The cooler core 72 is a heat exchanger for heat exchange between the second cooling liquid and the air conditioning wind Wac, and is disposed in the air passage 75 of the air conditioning unit 70. In the second cooling liquid circuit C2, the second cooling liquid pumped by the water pump 42 is cooled by the heat absorbed from the refrigerant in the evaporator 26a in the refrigerant circuit R as it passes through the heat exchanger 40. The cooled second cooling liquid is sent to the cooler core 72, where it cools the air conditioning air Wac.

The air conditioner 12 also includes the heat exchanger 50. The heat exchanger 50 is integrally formed with the evaporator 26b of the refrigerant circuit R and causes heat exchange between the refrigerant of the refrigerant circuit R and the third cooling liquid of the third cooling liquid circuit C3. The heat exchanger 50 may be, for example, a plate-type heat exchanger. The heat exchanger 50 is a third heat exchanger.

The third cooling liquid circuit C3 is a closed circuit for circulating the third cooling liquid, which is configured by connecting a water pump 52, a heat exchanger 50, and a battery 54 in series with cooling liquid pipes. **In** the third cooling liquid circuit C3, the cooling liquid pumped by the water pump 52 is cooled by the heat absorbed from the refrigerant in the evaporator 26b in the refrigerant circuit R as it passes through the heat exchanger 50. The cooled third cooling liquid is sent to the battery 54 to cool the battery 54. In this specification, the third cooling liquid circuit C3 and the third cooling liquid are also referred to as the battery cooling liquid circuit and the battery cooling liquid, respectively.

In this specification, the expansion valve 24a, the evaporator 26a, and the heat exchanger 40 are also referred to as the air conditioner expansion valve, air conditioner evaporator, and the air conditioner heat exchanger, respectively. In addition, the expansion valve 24b, the evaporator 26b, and the heat exchanger 50 are also referred to as the battery expansion valve, the battery evaporator, and a battery heat exchanger, respectively.

In the refrigerant circuit R, the refrigerant circulates as follows. The compressor 20 discharges high-pressure gaseous refrigerant, which is discharged into the condenser 22, where it is liquefied and condensed by heat exchange with the first cooling liquid of the first cooling liquid circuit C1 passing through the heat exchanger 30, thereby becoming high-pressure liquid refrigerant. The high-pressure liquid refrigerant flowing out of the condenser 22 is depressurized by the expansion valve 24a via the receiver 28, expands, becomes low-pressure refrigerant, and flows into the evaporator 26a. The low-pressure refrigerant flowing into the evaporator 26a evaporates by heat exchange with the second cooling liquid of the second cooling liquid circuit C2 passing through the heat exchanger 40 in the evaporator 26a, becomes a gas refrigerant, flows out of the evaporator 26a, and returns to the compressor 20.

In addition, the high-pressure liquid refrigerant flowing out from the condenser 22 is depressurized by the expansion valve 24b via the receiver 28, expands, becomes low-pressure refrigerant, and flows into the evaporator 26b. The low-pressure refrigerant flowing into the evaporator 26b evaporates by heat exchange with the third cooling liquid of the third cooling liquid circuit C3 passing through the heat exchanger 50 in the evaporator 26b, becomes a gas refrigerant, flows out of the evaporator 26b, and returns to the compressor 20.

The air conditioning unit 70 includes the blower 80 and the air passage 75 formed by the case (not shown). Inside the air passage 75, the blower 80, the cooler core 72, and the heater core 74 are arranged in order from the air flow direction. The heater core 74 is a heat exchanger to which cooling water heated by, for example, engine cooling water or a PTC heater for water heating is supplied. The heater core 74 may also be configured to be supplied with cooling liquid heated by the heat exchanger 30.

The blower 80 introduces air into the air passage 75 from the air intake port (not shown) and blows the air through the cooler core 72 and the heater core 74 to supply temperature-controlled air to the vehicle compartment. The air-mix door 82 is provided inside the air passage 75, and the air-mix door 82 adjusts the ratio of air passing through the cooler core 72 to the heater core 74. The air conditioning unit 70 may employ conventional HVAC (Heating, Ventilation, and Air Conditioning) technology.

As shown in FIG. 2, the engine room 92 and the vehicle compartment 90 are partitioned by the dashboard 94. The instrument panel (not shown) is provided on the vehicle compartment 90 side of the dashboard 94. The air conditioning unit 70 is disposed between the instrument panel and the dashboard 94.

The battery 54 is located under the floor of the vehicle compartment 90, i.e., under the floor panel 96. The battery 54 may also be located under the seats or in the rear of the vehicle, and its position is not limited.

The air conditioner 12 includes the controller (not shown). The controller may be configured to include processors and memory devices, and may be, for example, an ECU (Electronic Control Unit). The controller controls the devices included in the air conditioner 12 based on detection information from a plurality of sensors (temperature sensors that detect the outside air temperature, inside air temperature, and battery temperature, a solar radiation sensor, a pressure sensor, etc.) and setting information from a control panel operated by the user. The controller may employ conventional air conditioner control technology.

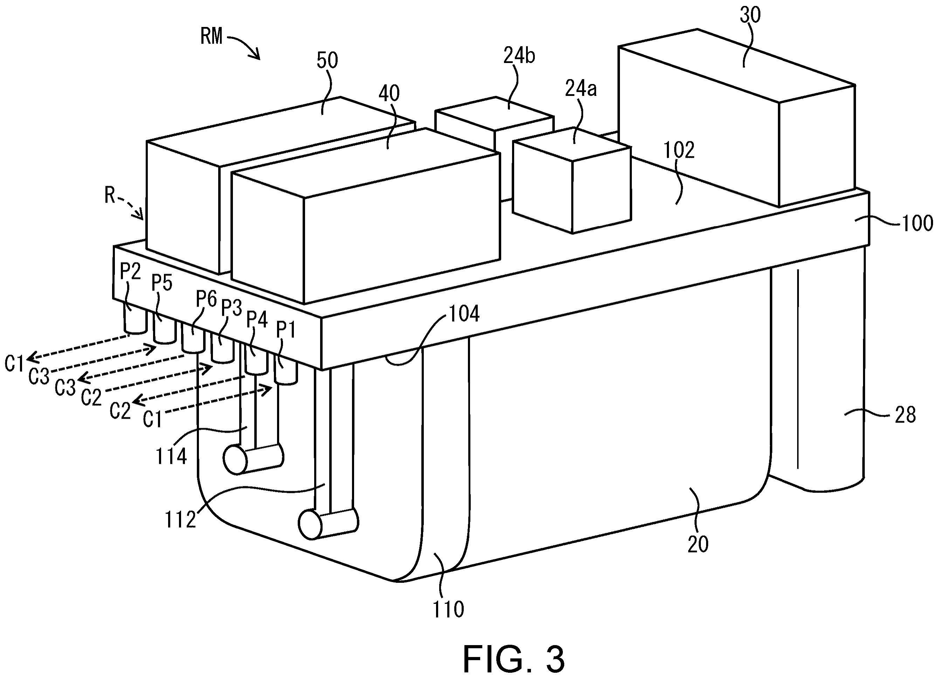

The refrigerant circuit R is integrated to constitute the refrigerant module RM as shown in FIG. 3. Specifically, the refrigerant module RM is a unit that integrates the devices (parts) within the dotted line in FIG. 1 of the air conditioner 12. As shown in FIG. 3, the refrigerant module RM includes the refrigerant circuit R, the heat exchangers 30, 40, and 50, the manifold member 110, and the plate 100.

The plate 100 is a fixation member to which multiple devices are fixed. The plate 100 has a rectangular shape as viewed from above and has a certain thickness. The material of the plate 100 may be, for example, aluminum. The first to third heat exchangers 30, 40, and 50 and the two expansion valves 24a and 24b are fixed to the upper surface 102 of the plate 100 by screws or the like. Additionally, the compressor 20, the receiver 28, and the manifold member 110 are fixed to the lower surface 104 of the plate 100 using screws or the like. In this way, since the devices constituting the refrigerant circuit R are fixed to the upper surface 102 and lower surface 104 of the plate 100, the refrigerant module RM can be simplified and miniaturized.

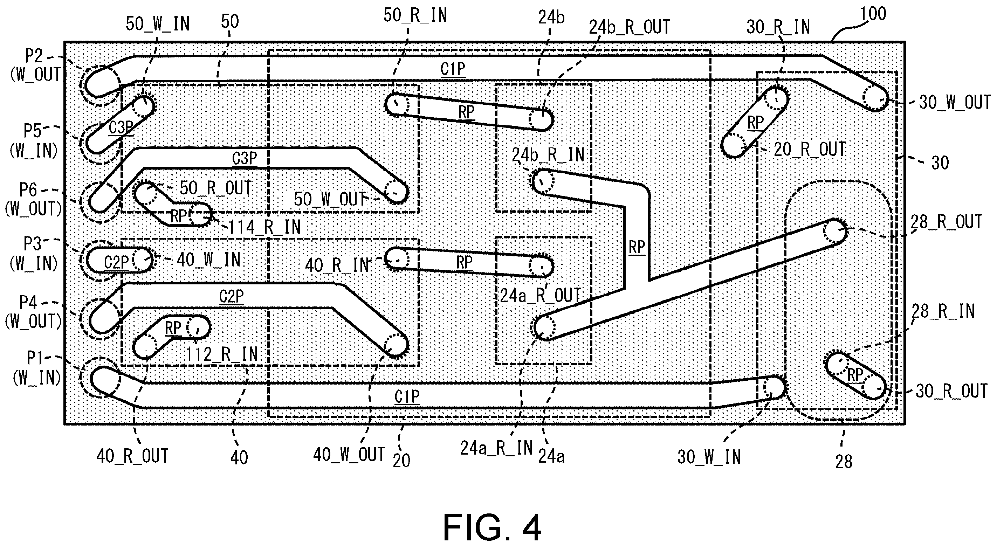

FIG. 4 shows a cross section of the plate 100 in FIG. 3. The flow paths are provided in the form of tunnels inside the plate 100. Specifically, the flow path RP for refrigerant circuit R and the flow paths C1P, C2P, and C3P, which are each part of cooling liquid circuits C1, C2, and C3, are provided inside the plate 100.

The first to third heat exchangers 30, 40, and 50 each include a refrigerant inlet, a refrigerant outlet, a cooling liquid inlet, and a cooling liquid outlet at the bottom of these heat exchangers 30, 40, and 50. In FIG. 4, the reference symbol with "_R_IN" added to the reference symbol of the target member indicates the position of the refrigerant inlet of the target member (for example, if the target member is the first heat exchanger 30, "30_R_IN" indicates the refrigerant inlet of the first heat exchanger 30). In the same figure, reference symbols with "_R_OUT", "_W_IN", and "_W_OUT" added to the reference symbol of the target member indicate the positions of the refrigerant outlet, the cooling liquid inlet, and the cooling liquid outlet of the target member, respectively.

The two expansion valves 24a and 24b also each include a refrigerant inlet and a refrigerant outlet at the bottom of these expansion valves 24a and 24b. The upper surface 102 of the plate 100 has holes (not shown) so that the refrigerant inlets, the refrigerant outlets, the cooling liquid inlets, and the cooling liquid outlets of the first to third heat exchangers 30, 40, and 50, and the refrigerant inlets and the refrigerant outlets of the two expansion valves 24a and 24b are able to communicate with the flow paths RP, C1P, C2P, and C3P inside the plate 100.

The receiver 28 includes a refrigerant inlet and a refrigerant outlet at the top of the receiver 28. The lower surface 104 of the plate 100 has holes (not shown) so that the refrigerant inlet and the refrigerant outlet of the receiver 28 are able to communicate with the flow path RP inside the plate 100.

The compressor 20 is disposed in contact with the manifold member 110. On the opposite side of the compressor 20 from the manifold member 110, the receiver 28 is disposed at a distance from the compressor 20. The compressor 20 has a refrigerant inlet (not shown) on the side facing the manifold member 110 and a refrigerant outlet (not shown) on the side facing the receiver 28.

The manifold member 110 includes two pipes 112 and 114. The two pipes 112 and 114 are each connected to the flow path RP inside the plate 100 through holes provided in the lower surface 104 of the plate 100 (see reference numerals 112_R_IN and 114_R_IN in FIG. 4). The refrigerant discharged from the second and third heat exchangers 40 and 50 (40_R_OUT and 50_R_OUT) flows into the two pipes 112 and 114 of the manifold member 110 via the plate 100. The manifold member 110 includes an internal flow path for combining the refrigerant in the two pipes 112 and 114, and the internal flow path is connected to the refrigerant inlet of the compressor 20.

The refrigerant discharge pipe (not shown) extending toward the lower surface 104 of the plate 100 is connected to the refrigerant outlet of the compressor 20. The upper part of the pipe communicates with the flow path RP inside the plate 100 through a hole provided in the lower surface 104 of the plate 100 (see reference numeral 20_R_OUT in FIG. 4). The refrigerant discharged from the compressor 20 flows into the refrigerant inlet (30_R_IN) of the heat exchanger 30 through the pipe and the plate 100.

As shown in FIG. 3, the refrigerant module RM includes the connection ports P1 to P6. The connection ports P1 to P6 are provided on the lower surface of one end of the plate 100 in the longitudinal direction. The connection ports P1 and P2 communicate with the internal flow path C1P of the plate 100, and pipes of the first cooling liquid circuit C1 is connected thereto. The connection ports P3 and P4 communicate with the internal flow path C2P of the plate 100, and pipes of the second cooling liquid circuit C2 are connected thereto. The connection ports P5 and P6 communicate with the internal flow path C3P of the plate 100, and pipes of the third cooling liquid circuit C3 are connected thereto.

In the refrigerant module RM described above, the flow paths RP, C1P, C2P, and C3P were provided inside the plate 100, but the flow paths may be provided by installing pipes on the upper side, lower side, or both sides of the plate 100. In addition, at least one of the flow paths RP, C1P, C2P, and C3P may be provided in the wall of the housing of the compressor 20, for example.

The refrigerant module RM is disposed in the engine room 92 as shown in FIG. 2. The refrigerant module RM may be held by a structure in the engine room 92, for example, by means of a bracket (not shown). The first cooling liquid circuit C1 is disposed in front of the refrigerant module RM. The refrigerant module RM may be positioned behind the front collision deformation area of the vehicle. This reduces the collision load input to the refrigerant module RM in the event of a frontal collision of the vehicle.

According to the embodiment described above, the refrigerant circuit R dissipates heat to the cooling liquid in the first cooling liquid circuit C1 and absorbs heat from the cooling liquids in the second and third cooling liquid circuits C2 and C3. This allows the refrigerant circuit R to be concentrated in a relatively narrow area within the vehicle and modularized. By preparing the refrigerant module RM in advance, the refrigerant module RM can be installed in the vehicle at the vehicle factory, and the refrigerant circuit R can be easily incorporated into the vehicle by connecting the pipes of the first to third cooling liquid circuits C1, C2, and C3 to the connection ports P1 to P6 of the refrigerant module RM. Since there is no need to individually install the components of the refrigerant circuit R into the vehicle, the installation of the refrigerant circuit R into the vehicle can be easily performed.

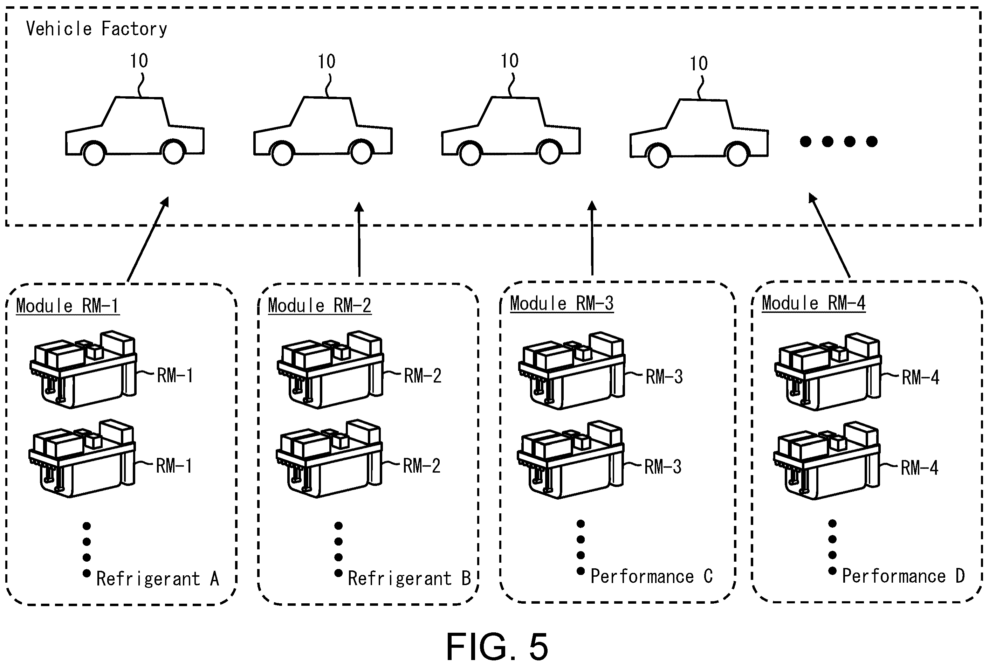

FIG. 5 is a diagram illustrating the assembly work of refrigerant modules RM at a vehicle factory. According to the embodiment described above, the module manufacturer can manufacture multiple types of refrigerant modules RM-1 to RM-4 in advance. At the vehicle factory, for example, depending on the vehicle type or the region where the vehicle 10 will be used, the desired refrigerant module can be selected from among the multiple types of refrigerant modules RM-1 to RM-4 and assembled into the vehicle 10.

For example, refrigerant A can be injected into the refrigerant circuit of the refrigerant module RM-1, and refrigerant B, which is a different refrigerant, can be injected into the refrigerant circuit of the refrigerant module RM-2. Additionally, multiple refrigerant modules RM-3 and RM-4 with different performance characteristics can be prepared in advance. The refrigerant modules can be modified to change their performance by altering the type or amount of refrigerant injected into the module or by changing the device (such as compressor 20) used in the module.

According to the embodiment described above, the components of the air conditioner 12 other than the refrigerant module RM, namely, the components constituting the first to third cooling liquid circuits C1, C2, and C3, can be shared by multiple vehicle models or multiple vehicles used in different regions.

In addition, according to the embodiment described above, the flow path RP for refrigerant is formed inside the plate 100 of the refrigerant module RM. Therefore, the refrigerant module RM can be made compact. Furthermore, since the number of pipes for refrigerant can be reduced, refrigerant leakage can be suppressed.

### <Another embodiment>

Next, another embodiment is described. FIG. 6 is a schematic diagram showing the configuration of the air conditioner 12a of another embodiment. This air conditioner 12a is configured by omitting the expansion valve 24b, the third heat exchanger 50, and the third cooling liquid circuit C3 from the air conditioner 12 of the above embodiment (see FIG. 1).

In this alternative embodiment, the battery 54 (see FIG. 1) is not cooled by the air conditioner 12a. The battery 54 may be cooled by a cooling device provided separately from the air conditioner 12a. In addition, this alternative embodiment may be adopted for vehicles such as engine vehicles that do not have the battery 54 (battery that supplies power to the motor), since a cooling device for the battery is not required.

FIG. 7 shows an example of a refrigerant module RMa corresponding to the air conditioner 12a in FIG. 6. The refrigerant module RMa is a unit that integrates the devices (parts) inside the dotted line in FIG. 6 of the air conditioner 12a. The refrigerant module RMa is configured by omitting the expansion valve 24b, the third heat exchanger 50, the pipe 114 of the manifold member 110, and the connection ports P5 and P6 from the refrigerant module RM of the above embodiment (see FIG. 3). The plate 100a of the refrigerant module RMa has a configuration in which the internal flow path of the plate 100 of the above embodiment (see FIG. 4) is changed in accordance with the omitted devices (parts).

### <Example of modification of refrigerant module>

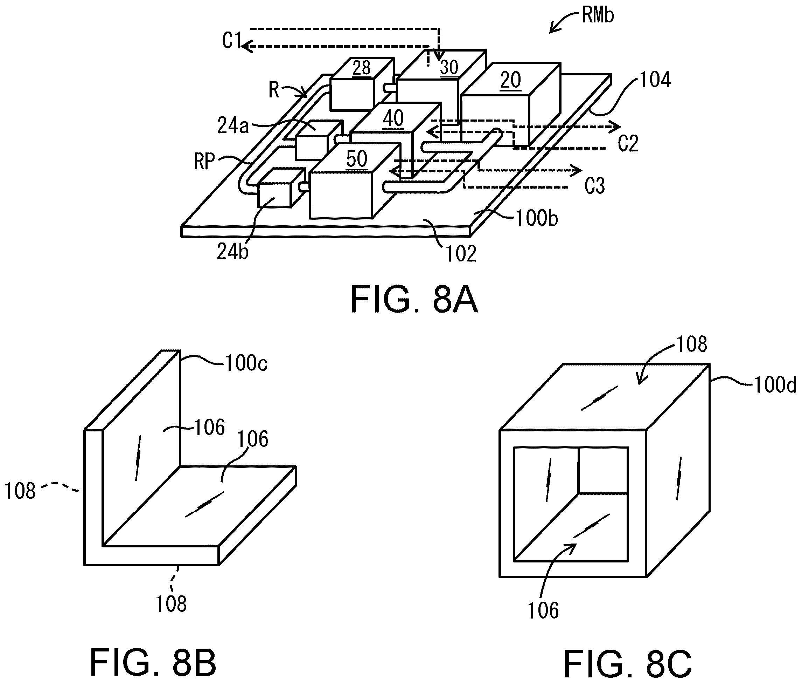

Next, an example of modification of the refrigerant module is described. FIG. 8A shows another refrigerant module RMb. In this refrigerant module RMb, multiple devices (parts) are fixed only to the upper surface 102 of the plate 100b. In addition, the plate 100b does not have a flow path inside, and the multiple devices are connected by pipes. The configuration of the refrigerant circuit is the same as that of the refrigerant circuit R shown in FIG. 1.

In the refrigerant module RMb shown in FIG. 8A, the refrigerant circuit Ra shown in FIG. 6 may be adopted. In addition, the plurality of devices may be fixed only to the lower surface 104 of the plate 100b, or to both the upper surface 102 and the lower surface 104.

Furthermore, in the embodiments described above, multiple devices were fixed to plate 100, 100a, and 100b as the fixation member. However, the fixation member may be other than plate. For example, as shown in FIG. 8B, the fixation member 100c may be a structure having an L-shaped cross section. In this case, the plurality of devices may be fixed to at least one of the two inner surfaces 106 and the two outer surfaces 108 of the fixation member 100c. The fixation member 100c may also include flow paths therein. In addition, as shown in FIG. 8C, the fixation member 100d may be a square tube-shaped structure. In this case, the plurality of devices may be fixed to at least one of the four inner surfaces 106 and the four outer surfaces 108 of the fixation member 100d. The fixation member 100d may also include flow paths inside.

## Claims

1. An in-vehicle air conditioner (12, 12a) comprising:
a refrigerant circuit (R, Ra) configured for circulating a refrigerant, the refrigerant circuit (R, Ra) comprising a compressor (20), a condenser (22) for heat dissipation, an expansion valve (24a), and an evaporator (26a) for heat absorption;
a first heat exchanger (30) which is integrally formed with the condenser (22) of the refrigerant circuit (R, Ra) and configured to transfer heat from the refrigerant contained in the condenser (22) to a first cooling liquid;
a first cooling liquid circuit (C1) configured for circulating the first cooling liquid, the first cooling liquid circuit (C1) having a radiator (34);
a second heat exchanger (40) which is integrally formed with the evaporator (26a) of the refrigerant circuit (R, Ra) and configured to cool a second cooling liquid with the refrigerant contained in the evaporator (26a);
a second cooling liquid circuit (C2) configured for circulating the second cooling liquid, the second cooling liquid circuit (C2) having a cooler core (72); and
an air conditioning unit (70) comprising an air passage (75) in which the cooler core (72) is disposed, the air conditioning unit (70) being configured to cool air passing through the air passage (75) and send the cooled air to a vehicle compartment (90),
wherein the compressor (20), the first heat exchanger (30), the expansion valve (24a), and the second heat exchanger (40) are fixed to a common fixation member (100, 100a, 100b, 100c, 100d), to thereby form a refrigerant module (RM, RMa, RMb) in which the refrigerant circuit (R, Ra) is integrated into one unit.

2. The in-vehicle air conditioner according to claim 1, wherein
the common fixation member comprises a plate (100, 100a, 100b); and
the compressor (20), the first heat exchanger (30), the expansion valve (24a), and the second heat exchanger (40) are fixed to an upper surface (102) and/or a lower surface (104) of the plate (100, 100a, 100b).

3. The in-vehicle air conditioner according to claim 2, wherein
the plate (100, 100a) includes in an inside thereof a flow channel (RP) through which the refrigerant flows; and
the flow channel (RP) in the plate (100, 100a)) serves as a refrigerant channel connecting at least two of the compressor (20), the first heat exchanger (30), the expansion valve (24a), and the second heat exchanger (40).

4. The in-vehicle air conditioner according to any one of claims 1-3, wherein
the evaporator (24a) and the second heat exchanger (40) are an air conditioner evaporator and an air conditioner heat exchanger, respectively;
the refrigerant circuit (R) further comprises a battery evaporator (26b);
the in-vehicle air conditioner further comprises;
a battery heat exchanger (50) which is integrally formed with the battery evaporator (26b) in the refrigerant circuit (R) and configured to cool a battery cooling liquid with the refrigerant contained in the battery evaporator (26b), and
a battery cooling liquid circuit (C3) configured to circulate the battery cooling liquid for cooling a battery (54) installed in a vehicle; and
the battery heat exchanger (50) is fixed to the common fixation member (100, 100b).

5. A refrigerant module (RM, RMa, RMb) for an in-vehicle air conditioner (12, 12a), wherein
the in-vehicle air conditioner (12, 12a) comprises:
a refrigerant circuit (R, Ra) configured for circulating a refrigerant, the refrigerant circuit (R, Ra) comprising a compressor (20), a condenser (22) for heat dissipation, an expansion valve (24a), and an evaporator (26a) for heat absorption;
a first heat exchanger (30) which is integrally formed with the condenser (22) of the refrigerant circuit (R, Ra) and configured to transfer heat from the refrigerant contained in the condenser (22) to a first cooling liquid;
a first cooling liquid circuit (C1) configured for circulating the first cooling liquid, the first cooling liquid circuit (C1) having a radiator (34);
a second heat exchanger (40) which is integrally formed with the evaporator (26a) of the refrigerant circuit (R, Ra) and configured to cool a second cooling liquid with the refrigerant contained in the evaporator (26a);
a second cooling liquid circuit (C2) configured for circulating the second cooling liquid, the second cooling liquid circuit (C2) having a cooler core (72); and
an air conditioning unit (70) comprising an air passage (75) in which the cooler core (72) is disposed, the air conditioning unit (70) configured to cool air passing through the air passage (75) and supply the cooled air to a vehicle compartment (90); and
the refrigerant module (RM, RMa, RMb) comprises
the refrigerant circuit (R, Ra),
the first heat exchanger (30),
the second heat exchanger (40), and
a fixation member (100, 100a, 100b, 100c, 100d) to which the compressor (20), the first heat exchanger (30), the expansion valve (24a), and the second heat exchanger (40) are fixed so as to integrate the refrigerant circuit (R, Ra) into one unit.
